(19) Europäisches Patentamt
European Patent Office
Office européen des brevets

(11) Publication number: **0 011 893**
**B1**

(12) **EUROPEAN PATENT SPECIFICATION**

(45) Date of publication of patent specification: **09.06.82**

(21) Application number: **79200677.7**

(22) Date of filing: **20.11.79**

(51) Int. Cl.³: **A 01 N 53/00,**
A 01 N 37/46 //(A01N53/00, 37/46), (A01N37/46, 37/38)

(54) **Pesticidal composition and method of combating pests.**

(30) Priority: **29.11.78 GB 4647678**

(43) Date of publication of application:
**11.06.80 Bulletin 80/12**

(45) Publication of the grant of the patent:
**09.06.82 Bulletin 82/23**

(84) Designated Contracting States:
**AT BE CH DE FR GB IT LU NL SE**

(56) References cited:
FR - A - 1 058 008
FR - A - 1 400 450
FR - A - 1 575 558
FR - A - 2 013 334
FR - A - 2 143 820
FR - A - 2 241 533
FR - A - 2 267 042
FR - A - 2 330 671
GB - B - 1 413 491
US - A - 2 416 522

(73) Proprietor: **SHELL INTERNATIONALE RESEARCH MAATSCHAPPIJ B.V.**
**Carel van Bylandtlaan 30**
**NL-2596 HR DEN HAAG (NL)**

(72) Inventor: **Jenner, Donald Walter**
**Kennaway**
**Ospringe Faversham, Kent (GB)**

(74) Representative: **Rogers, Roy Charles et al,**
**4 York Road**
**London SE1 7NA (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).



Courier Press, Leamington Spa, England.

## Pesticidal composition and method of combating pests

This invention relates to a pesticidal composition and a method of combating pests.

A class of insecticides commonly referred to in the art as "pyrethroid insecticides" is known and various examples of pyrethroid insecticides are described, together with their preparation, in UK Patent Specification No. 1,413,491 and US Patents Nos. 3,268,398, 3,835,178 and 3,996,244.

The Applicant has found that a composition including certain insecticides and members of a class of amino acid derivatives, some of which are known as herbicides or as fungicides, possess synergistic activity with respect to insects, that is to say the activity of the combination of the two pesticides produces a more-than-additive pesticidal effect.

According to the present invention there is provided a pesticidal composition comprising, as active ingredients,

(a) an insecticide of formula I:

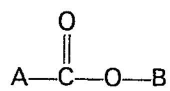

(I)

wherein A is a substituted benzyl group of formula IV

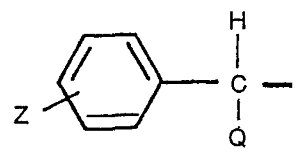

(IV)

wherein Z represents a halogen atom, or a $C_{1-4}$ alkoxy or haloalkoxy group and Q represents a $C_{1-6}$ alkyl group, or A is a cyclopropyl group of formula V:

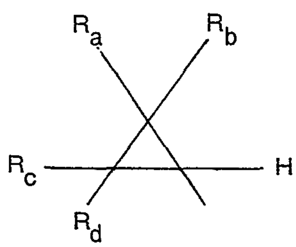

(V)

wherein $R_a$ and $R_b$ are independently $C_{1-6}$ alkyl groups or halogen atoms; or $R_a$ and $R_b$ together represent a $C_{2-6}$ alkylene group, or $R_a$ is hydrogen and $R_b$ is a $C_{2-6}$ alkenyl group, or a $C_{2-6}$ haloalkenyl group containing 1 to 3 chlorine or bromine atoms; $R_c$ and $R_d$ are independently $C_{1-6}$ alkyl groups or $R_c$ and $R_d$ together represent a $C_{2-6}$ alkylene group, and B is a group of formula:

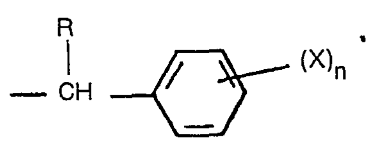

(II)

wherein R is hydrogen, cyano or ethynyl, each X is independently alkyl, alkenyl, aralkyl or aryloxy and *n* is 1 to 5 or B is a 3,4,5,6-tetrahydrophthalimidomethyl group; and

(b) an $\alpha$-amino acid derivative of formula III:

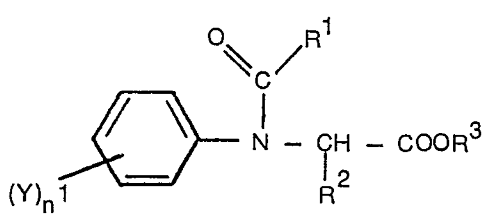

(III)

wherein $R^1$ is a methoxymethyl group or is a phenyl group optionally substituted by 1 to 5 substituents independently selected from halo, $C_{1-4}$ alkyl, $C_{1-4}$ alkoxy, nitro and trifluoromethyl moieties, $R^2$ is hydrogen or methyl, $R^3$ is $C_{2-11}$ alkyl, each Y is independently halo, methyl or trifluoromethyl and *n* is 1 to 5.

It should be noted that optical isomers, cis-trans isomers and other kinds of geometric isomers of the compounds of formula I and, where appropriate, of the compounds of formula III, are within the scope of this invention as well as recemates and mixtures of isomers of one or more of the compounds of formula I or, where appropriate, of the compounds of formula III.

In the compounds of formula I, generally an alkyl, cycloalkyl or alkenyl group represented by X preferably contains up to 6 carbon atoms, and an aralkyl or aryloxy group represented by X preferably contains up to 12 carbon atoms.

Preferably B represents a group of formula II when A represents a substituted benzyl group of formula IV wherein Z represents a halogen, preferably chlorine, atom, or a $C_{1-4}$ alkoxy or haloalkoxy group, e.g. methoxy or difluoromethoxy, and Q represents a $C_{1-6}$ alkyl group, especially a branched alkyl group such as an isopropyl group. Examples of such compounds of formula I wherein A is a group of formula IV are those where A is $\alpha$-isopropyl-4-chlorobenzyl, R is hydrogen or cyano, *n* is 1, and X is 3-phenoxy, e.g. $\alpha$-cyano-3-phenoxybenzyl-$\alpha$-isopropyl-4-chlorophenyl acetate.

When B represents a group of formula II, A may also advantageously represent a cyclopropyl group of formula V wherein $R_a$ and $R_b$ are independently $C_{1-6}$ alkyl groups, especially methyl, or halogen, especially chlorine, bromine or fluorine, atoms; or $R_a$ and $R_b$ together represent a $C_{2-6}$ alkylene group, especially an alkylene group containing 3 carbon atoms; or $R_a$ is a hydrogen and $R_b$ is a $C_{2-6}$ alkenyl group, especially isobutenyl, a $C_{2-6}$ haloalkenyl group containing 1 to 3 chlorine or bromine atoms, especially mono-chloro or mono-bromo-vinyl or dichloro- or dibromo-vinyl or a $C_{2-6}$ haloalkyl group containing 2 to 5 chlorine and/or bromine atoms, especially tetrachloroethyl, tetrabromomethyl or dibromo-dichloroethyl group; or $R_a$ and $R_b$ together with the interjacent carbon atom represent an unsaturated carbocyclic ring system of up to 12 carbon atoms, especially an indenylidene group; $R_c$ and $R_d$ are independently $C_{1-6}$ alkyl groups, especially methyl, or $R_c$ and $R_d$ together represent a $C_{2-6}$ alkylene group, especially an alkylene group containing 3 carbon atoms. Examples of compounds of formula I wherein A is a group of formula V are those where A is 2,2-dimethyl-3-(2,2-dichlorovinyl)-cyclopropyl or 2,2,3,3-tetramethyl-cyclopropyl, R is hydrogen or cyano, *n* is 1 and X is 3-phenoxy.

When B is a 3,4,5,6-tetrahydrophthalimidomethyl group, A is preferably a 2,2-dimethyl-3-(2-methyl-1-propenyl)cyclopropyl group.

In the compounds of formula III, when $R^1$ is optionally substituted phenyl, the optional substituents are 1 to 5 substituents selected from halo, e.g., chloro or bromo, $C_{1-4}$ alkyl, e.g., methyl, $C_{1-4}$ alkoxy, e.g., methoxy, nitro and trifluoromethyl moieties. Preferably $R^1$ in formula III is unsubstituted phenyl or methoxymethyl. $R^2$ in formula III is advantageously methyl. $R^3$ in formula II is preferably $C_{2-8}$ alkyl, e.g. *i*-propyl, 2-ethylhexyl or ethyl. It is preferred for $n^1$ to be 2, and for each Y to be selected from fluoro, chloro and methyl. For example $(Y)_n1$ may advantageously be 3,4-dichloro, 3-chloro-4-fluoro or 2,6-dimethyl.

Many of the compounds of formula III are known as herbicides, e.g. ethyl N-benzoyl-N-(3,4-dichlorophenyl)-2-aminopropionate (benzoylprop-ethyl) and isopropyl N-benzoyl-N-(3-chloro-4-fluorophenyl)-2-aminopropionate (flamprop-isopropyl), and may be prepared as described in UK Patent Specification No. 1,164,160 or W. German O.S. No. 2,650,434, or are known as fungicides, e.g. methyl N-methoxyacetyl-N-methoxyacetyl-N-(2,6-dimethylphenyl)-2-aminopropionate, and may be prepared as described in UK Patent Specification No. 1,500,581, or the componds of formula III may be prepared by analogous methods to those described in UK Patent Specifications Nos. 1,164,160 and 1,500,581 and W. German O.S. No. 2,650,434.

The $\alpha$-amino acid compounds of formula III have a surprising synergistic efect on the pesticidal activity of the pyrethroid insecticides of formula I, particularly with respect to dipterous insects, e.g., houseflies and sheep blowfly. Such mixtures are thus of considerable potential utility in the domestic, agrochemical and animal health fields.

The weight ratio of pyrethroid insecticide of formula I to $\alpha$-amino acid of formula III will normally be in the range 5:1 to 1:50.

The pesticidal composition according to the invention preferably also comprises a carrier, especially at least two carriers, at least one of which is a surface-active agent.

A carrier may be a solid or liquid material, which may be inorganic or organic and of synthetic or natural origin. Typical solid carriers include natural and synthetic clays and silicates, for example, natural silicas, for example diatomaceous earths, and aluminium silicates, for example kaolinites, montmorillonites and micas. Typical liquid carriers are ketones, for example methylcyclohexanone, aromatic hydrocarbons, for example methylnaphthalenes, petroleum fractions, for example petroleum xylenes and light mineral oils, and chlorinated hydrocarbons, for example carbon tetrachloride. Mixtures of liquids are often suitable.

One or more surface-active agents and/or stickers can be included in the composition. A surface-active agent may be an emulsifying agent or a dispersing agent or a wetting agent; it may be non-ionic or ionic. Any of the surface-active agents usually applied in formulating insecticides may be used. Examples of suitable surface-active agents are the sodium and calcium salts of polyacrylic acids and lignin sulphonic acids; the condensation products of fatty acids of aliphatic amines or amides containing at least 12 carbon atoms in the molecule with ethylene oxide and/or propylene oxide; fatty acid esters of glycerol, sorbitol, sucrose or pentaerythritol, condensates of these with ethylene oxide

and/or propylene oxide; condensation products of fatty alcohols or alkyl phenols, for example *p*-octylphenol or *p*-octylcresol, with ethylene oxide and/or propylene oxide; sulphates or sulphonates of these condensation products; alkali or alkaline earth metal salts, preferably sodium salts, of sulphuric acid esters containing at least 10 carbon atoms in the molecule, for example sodium lauryl sulphate, sodium secondary alkyl sulphates, sodium salts of sulphonated castor oil, and sodium alkylaryl sulphonates, such as sodium dodecylbenzene sulphonate; and polymers of ethylene oxide and copolymers of ethylene oxide and propylene oxide.

The composition of the invention may for example be formulated as a wettable powder, microcapsules, a dust, granules, a solution, an emulsifiable concentrate, an emulsion, a suspension concentrate or an aerosol. The composition may have controlled release properties, or may be suitable for use as a bait.

Wettable powders usually contain 25, 50 or 75% w of active ingredient and may contain, in addition to inert solid material, 3—10% w of a dispersing agent and, where necessary, 0—10% w of a stabiliser, a penetrant and/or a sticker. A dust is usually formulated as a dust concentrate having a composition similar to that of a wettable powder but without a dispersant, and is dilduted in the field with further solid carrier to give a composition usually containing $\frac{1}{2}$—10% w of active ingredient.

Granules usually have a size in the range of from 10 to 100 BS mesh (1.676—0.152 mm) and may be manufactured by agglomeration or impregnation techniques. Generally, granules will contain $\frac{1}{2}$—25% w active ingredient and 0—10% w of additives, for example a stabiliser, slow-release modifier and/or a binding agent.

Emulsifiable concentrates usually contain, in addition to a solvent, and, when necessary, cosolvent, 10—50% w active ingredient, 2—20% w/v emulsifier and 2—20% w/v of other additives, for example a stabiliser, a penetrant and/or a corrosion inhibitor. A suspension concentrate is a stable, non-sedimenting, flowable product and usually contains 10—75% w active ingredient, 0.5—15% w of dispersing agent, 0.1—10% w of suspending agent, for example protective colloid and/or a thixotropic agent, and 0—10% w of other additives including, for example, a defoamer, a corrosion inhibitor, a stabiliser, a penetrant and/or a sticker, and as dispersant, water or an organic liquid in which the active ingredient is substantially insoluble; certain organic additives and/or inorganic salts may be dissolved in the dispersant to assist in preventing sedimentation or as anti-freeze for water.

The aqueous dispersions and emulsions formed by diluting a wettable powder or an emulsifiable concentrate of the invention with water, also lie within the scope of the present invention. Such dispersions and emulsions may be of the water-in-oil or of the oil-in-water type, and may have a thick "mayonnaise"-like consistency.

A composition of the invention may also contain other ingredients, for example, one or more other compounds possessing pesticidal, herbicidal or fungicidal properties, or attractants, for example pheromones or food ingredients, for use in baits and trap formulations.

The invention also includes a method of combating pests at a locus characterised in that a pesticidal composition according to the invention is applied to the locus.

The invention will be further understood from the following examples which illustrate the usefulness of the invention.

The compounds of formula III employed in the tests had negligible insecticidal activity but acted as synergists in enhancing the performance of the various compounds of formula I.

Activity tests against housefly *(Musca domestica)* were effected by the following procedure. The $LD_{50}$'s (the lethal dose of compound of formula I to kill 50% of the insects) were calculated by employing a series of acetone solutions of the compounds of formula I alone and with compounds of formula II at varying concentrations. Two to three day old adult female houseflies *(Musca domestica)* were anaesthetised with carbon dioxide, and 1 $\mu$l of the test solution was applied by means of a micrometer syringe to the ventral side of the abdomen of each fly, 20 flies being tested. The treated flies were held in glass jars covered with paper tissue held by an elastic band. Cotton wool pads soaked in dilute sugar solution were placed on top of the tissue as food. After 24 hours the percentage of dead and moribund flies were recorded for each test. From these results the $LD_{50}$'s in micrograms of active material and hence synergist ratios were calculated.

$$\text{Synergist ratio} = \frac{LD_{50}\ \text{(compound of formula I alone)}}{LD_{50}\ \text{(compound of formula I in mixture)}}$$

The compounds of formula I used in the Examples were as follows:—

Compound A

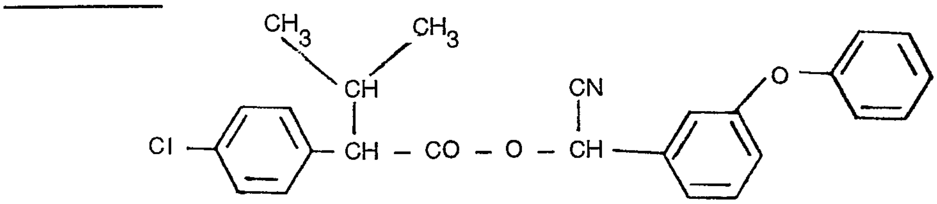

Compound B

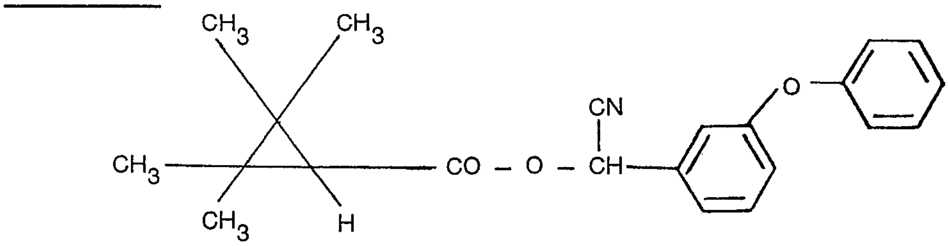

Compound C

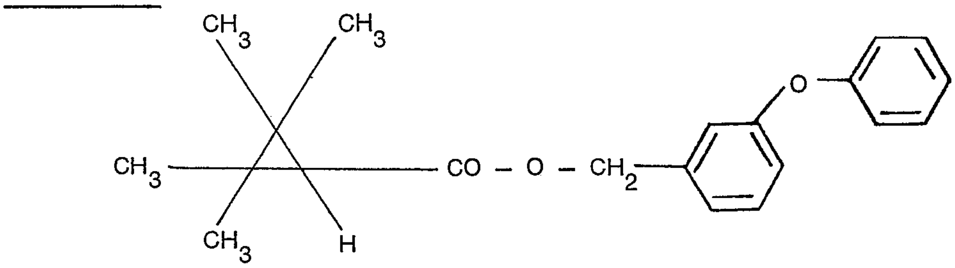

Compound D

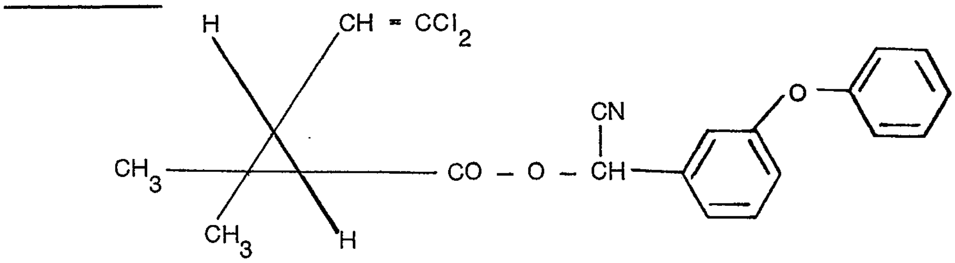

Compound E

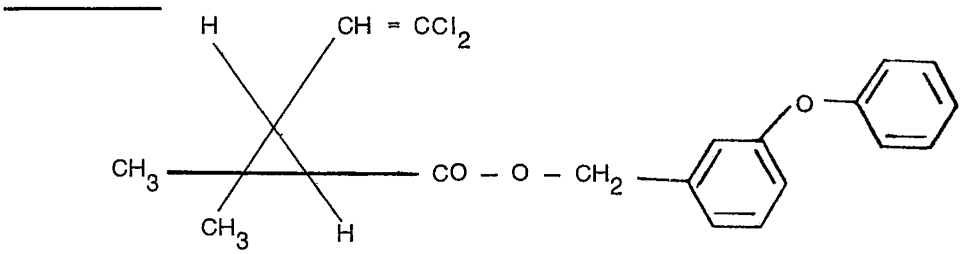

Compound F

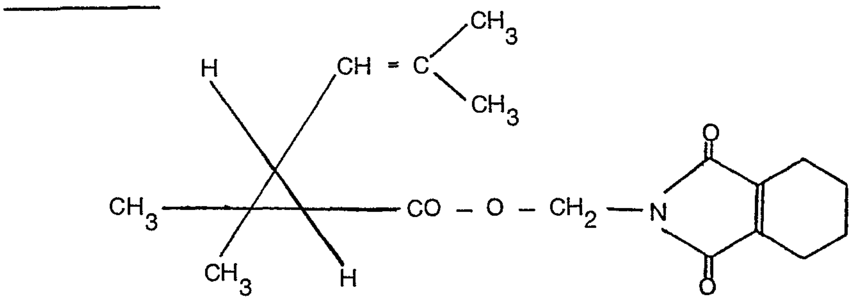

The compounds of formula III used in the Examples were as follows:

Compound P

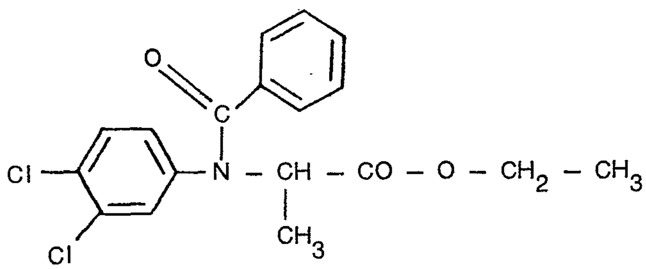

Compound Q

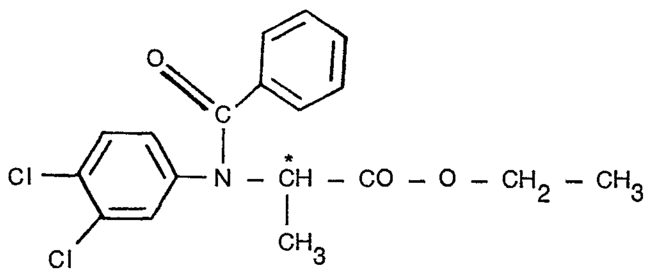

(–) isomer

Compound R

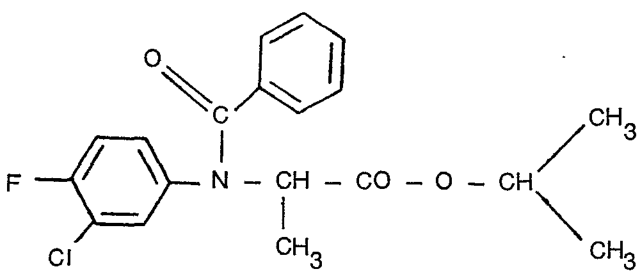

Compound S

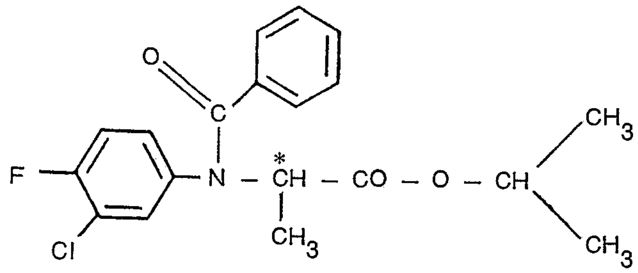

(–) isomer

Compound T

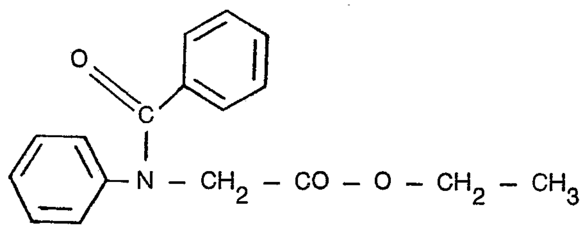

Compound U

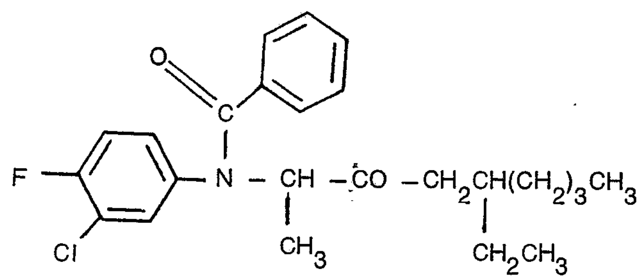

Compound V

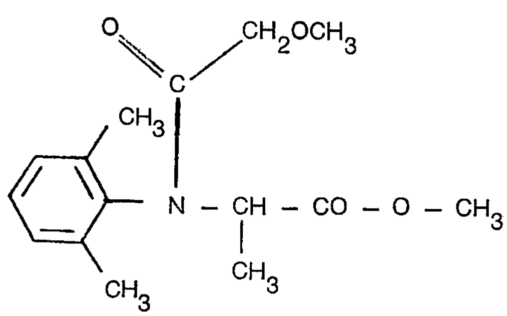

Example 1

Combinations of Compound A with Compounds P to V were tested by the procedure described above. In all cases the compound of formula II was dosed at a level of 5 $\mu$g per fly. The results are given in Table 1.

TABLE 1

| Compound of formula I | Compound of Formula III | Synergist Ratio |
|---|---|---|
| A | P | 12.0 |
| A | Q | 12.2 |
| A | R | 8.4 |
| A | S | 14.2 |
| A | T | 1.5 |
| A | U | 12.0 |
| A | V | 3.3 |

Example 2

Combinations of compounds A to E with Compound Q were tested by the procedure described above. In all cases the Compound Q was dosed at a level of 5 $\mu$g per fly. The results are given in Table 2.

TABLE 2

| Compound of formula I | Compound of formula III | Synergist Ratio |
|---|---|---|
| A | Q | 12.2 |
| B | Q | 4 |
| C | Q | 1.3 |
| D | Q | 6.7 |
| E | Q | 2.1 |

Example 3

Combinations of Compound P were tested at various dosage levels of the Compound P. The results are given in Table 3.

TABLE 3

| Dosage level of Compound P ($\mu$g per fly) | Synergist Ratio |
|---|---|
| 5 | 12 |
| 2 | 11.5 |
| 0.6 | 7.7 |
| 0.2 | 1.8 |

Example 4

Combinations of Compound F with Compound P were tested following the procedure used in Examples 1 and 2, the Compound P being dosed at a level of 5 $\mu$g per fly. A synergist ratio of 8.7 was obtained.

**Claims**

1. A pesticidal composition characterised in that the active ingredient comprises a combination of (a) an insecticide of formula I:

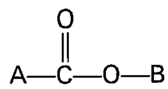

(I)

wherein A is substituted benzyl group of formula IV

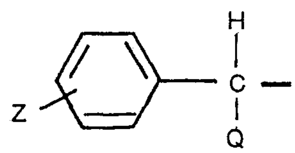

(IV)

wherein Z represents a halogen atom, or a $C_{1-4}$ alkoxy or haloalkoxy group and Q represents a $C_{1-6}$ alkyl group, or A is a cyclopropyl group of formula V:

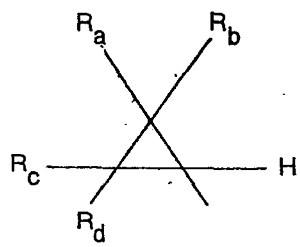

(V)

wherein $R_a$ and $R_b$ are independently $C_{1-6}$ alkyl groups or halogen atoms; or $R_a$ and $R_b$ together represent a $C_{2-6}$ alkylene group, or $R_a$ is hydrogen and $R_b$ is a $C_{2-6}$ alkenyl group, or a $C_{2-6}$ haloalkenyl group containing 1 to 3 chlorine or bromine atoms; $R_c$ and $R_d$ are independently $C_{1-6}$ alkyl groups or $R_c$ and $R_d$ together represent a $C_{2-6}$ alkylene group, and B is a group of formula:

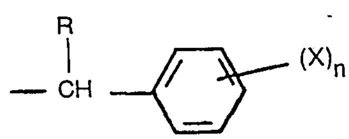

(II)

wherein R is hydrogen, cyano or ethynyl, each X is independently alkyl, alkenyl, aralkyl or aryloxy and *n* is 1 to 5 or B is a 3,4,5,6-tetrahydrophthalimidomethyl group; and
(b) an $\alpha$-amino acid derivative of formula III:

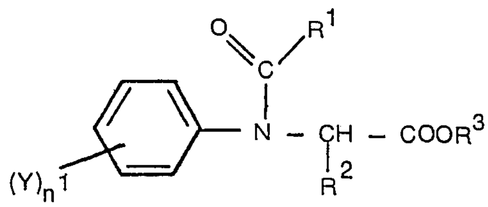

(III)

wherein $R^1$ is a methoxymethyl group or is a phenyl group optionally substituted by 1 to 5 substituents independently selected from halo, $C_{1-4}$ alkyl, $C_{1-4}$ alkoxy, nitro and trifluoromethyl moieties, $R^2$ is hydrogen or methyl, $R^3$ is $C_{2-11}$ alkyl, each Y is independently halo, methyl or trifluoromethyl and $n^1$ is 1 to 5.

2. A composition according to Claim 1 further characterised in that in the insecticide of formula I A is a substituted benzyl group of formula IV and B is a group of formula II.

3. A composition according to Claim 1 or 2 further characterised in that in the insecticide of formula I A is $\alpha$-isopropyl-4-chlorobenzyl, R is hydrogen or cyano, *n* is 1 and X is 3-phenoxy and B is a group of formula II.

4. A composition according to Claim 1 further characterised in that in the insecticide of formula I A is a cyclopropyl group of formula V and B is a group of formula II.

5. A composition according to Claim 1 or 4 further characterised in that in the insecticide of

formula I A is 2,2-dimethyl-3-(2,2-dichlorovinyl)cyclopropyl or 2,2,3,3-tetramethylcyclopropyl, R is hydrogen or cyano, *n* is 1 and X is 3-phenoxy and B is a group of formula II.

6. A composition according to Claim 1 further characterised in that in the insecticide of formula I A is 2,2-dimethyl-3-(2-methyl-1-propenyl)cyclopropyl and B is a 3,4,5,6-tetrahydrophthalimidomethyl group.

7. A composition according to any one of Claims 1 to 6 further characterised in that in the compound of formula III $R^1$ is unsubstituted phenyl or methoxymethyl, and $R^3$ is $C_{2-8}$ alkyl.

8. A composition according to Claim 7 further characterised in that in the compound of formula III $R^2$ is methyl, $n^1$ is 2 and each Y is selected from fluoro, chloro and methyl.

9. A composition according to Claim 7 or 8 further characterised in that in the compound of formula III $(Y)_n1$ is 3,4-dichloro, 3-chloro-4-fluoro, or 2,6-dimethyl.

10. A method of combating pests at a locus characterised by applying to the locus a pesticidal composition according to any one of Claims 1 to 9.

**Revendications**

1. Composition pesticide caractérisée en ce que l'ingrédient actif comprend une combinaison de:
(a) un insecticide de formule I:

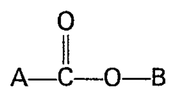

(I)

dans laquelle A est un groupe benzyle substitué de formule IV:

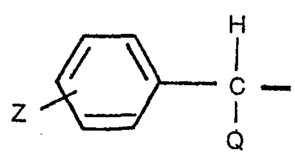

(IV)

dans laquelle Z représente un atome d'halogène ou un groupe alcoxy ou halogéno-alcoxy en $C_{1-4}$ et Q représente un groupe alcoyle en $C_{1-6}$, ou A est un groupe cyclopropyle de formule V:

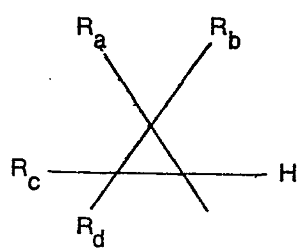

(V)

dans laquelle $R_a$ et $R_b$ sont chacun indépendamment un groupe alcoyle en $C_{1-6}$ ou un atome d'halogène; ou $R_a$ et $R_b$ représentent ensemble un groupe alcoylène en $C_{2-6}$, ou $R_a$ est de l'hydrogène et $R_b$ est un groupe alcényle en $C_{2-6}$, ou un groupe halogéno-alcényle en $C_{2-6}$ contenant 1 à 3 atomes de chlore ou de brome; $R_c$ et $R_d$ sont chacun indépendamment un groupe alcoyle en $C_{1-6}$ ou $R_c$ et $R_d$ représentent ensemble un groupe alcoylène en $C_{2-6}$ et B est un groupe de formule:

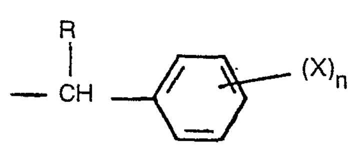

(II)

dans laquelle R est de l'hydrogène ou un groupe cyano ou éthynyle, chaque X est indépendamment un groupe alcoyle, alcényle, aralcoyle ou aryloxy et *n* est un nombre de 1 à 5 ou B est un groupe 3,4,5,6-tétrahydrophtalimidométhyle; et

(b) un dérivé d'$\alpha$-amino-acide de formule III:

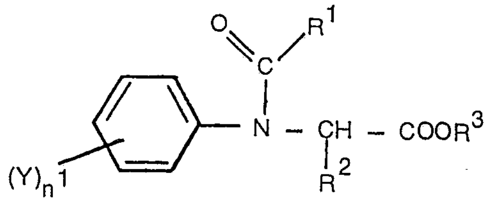

(III)

dans laquelle $R^1$ est un groupe méthoxyméthyle ou est un groupe phényle éventuellement substitué par 1 à 5 substituants choisis indépendamment parmi les halogènes et les groupes alcoyle en $C_{1-4}$, alcoxy en $C_{1-4}$, nitro et trifluorométhyle, $R^2$ est un atome d'hydrogène ou un groupe méthyle, $R^3$ est un groupe alcoyle en $C_{2-11}$, chaque Y indépendamment est un atome d'halogène ou un groupe méthyle ou trifluorométhyle et $n^1$ est un nombre de 1 à 5.

2. Composition selon la revendication 1, caractérisée en outre en ce que dans l'insecticide de formule I, A est un groupe benzyle substitué de formule IV et B est un groupe de formule II.

3. Composition selon l'une des revendications 1 et 2, caractérisée en outre en ce que dans l'insecticide de formule I A est un groupe $\alpha$-isopropyl-4-chlorobenzyle, R est de l'hydrogène ou un groupe cyano, *n* est 1 et X est un groupe 3-phénoxy et B et un groupe de formule II.

4. Composition selon la revendication 1, caractérisée en outre en ce que dans l'insecticide de formule I, A est un groupe cyclopropyle de formule V et B est un groupe de formule II.

5. Composition selon l'une des revendications 1 et 4, caractérisée en outre en ce que dans l'insecticide de formule I, A est un groupe 2,2-diméthyl-3-(2,2-dichlorovinyl)cyclopropyle ou 2,2,3,3-tétraméthylcyclopropyle, R est de l'hydrogène ou un groupe cyano, *n* est 1 et X est un groupe 3-phénoxy et B est un groupe de formule II.

6. Composition selon la revendication 1, caractérisée en outre en ce que dans l'insecticide de formule I A est un groupe 2,2-diméthyl-3-(2-méthyl-1-propényl)cyclopropyle et B est un groupe 3,4,5,6-tétrahydrophtalimidométhyle.

7. Composition selon l'une quelconque des revendications 1 à 6, caractérisée en outre en ce que dans le composé de formule III, $R^1$ est un groupe phényle non substitué ou méthoxyméthyle et $R^3$ est un groupe alcoyle en $C_{2-8}$.

8. Composition selon la revendication 7, caractérisée en outre en ce que dans le composé de formule III, $R^2$ est un groupe méthyle, $n^1$ est 2 et chaque Y est choisi parmi les substituants fluoro, chloro et méthyle.

9. Composition selon l'une des revendications 7 et 8, caractérisée en outre en ce que dans le composé de formule III, $(Y)_n{}^1$ a l'une des significations 3,4-dichloro, 3-chloro-4-fluoro et 2,6-diméthyle.

10. Procédé de lutte contre des parasites en un lieu, caractérisé en ce qu'on applique en ce lieu une composition pesticide selon l'une quelconque des revendications 1 à 9.

**Patentansprüche**

1. Zusammensetzung für die Schädlingsbekämpfung, dadurch gekennzeichnet, dass der Aktivbestandteil eine Kombination aus

(a) einem Insektizid der Formel I

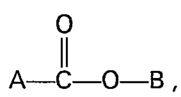

(I)

worin A eine substituierte Benzylgruppe der Formel IV

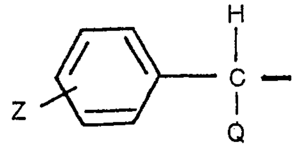

(IV)

ist, worin Z ein Halogenatom bedeutet, oder eine $C_{1-4}$-Alkoxy- oder Halogenalkoxygruppe ist und Q eine $C_{1-6}$-Alkylgruppe bedeutet, oder A eine Cyclopropylgruppe der Formel V

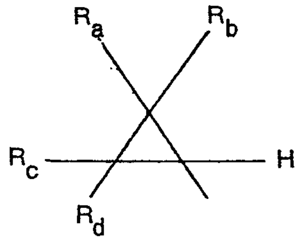

(V)

ist, worin $R_a$ und $R_b$ unabhängig voneinander $C_{1-6}$-Alkylgruppen oder Halogenatome sind; oder $R_a$ und $R_b$ zusammen eine $C_{2-6}$-Alkylengruppe bedeuten, oder $R_a$ Wasserstoff ist und $R_b$ eine $C_{2-6}$-Alkenylgruppe, oder eine $C_{2-6}$-Halogenalkenylgruppe mit 1 bis 3 Chlor- oder Bromatomen ist; $R_c$ und $R_d$ unabhängig voneinander $C_{1-6}$-Alkylgruppen sind oder $R_c$ und $R_d$ gemeinsam eine $C_{2-6}$-Alkylengruppe bedeuten, und B eine Gruppe der Formel

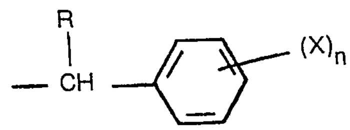

(II)

ist, worin R Wasserstoff, Cyano oder Ethinyl ist, jeder Rest X unabhängig Alkyl, Alkenyl, Aralkyl oder Aryloxy ist und *n* 1 bis 5 ist oder B eine 3,4,5,6-Tetrahydrophthalimidomethylgruppe ist; und

(b) einem $\alpha$-Aminosäurederivat der Formel III

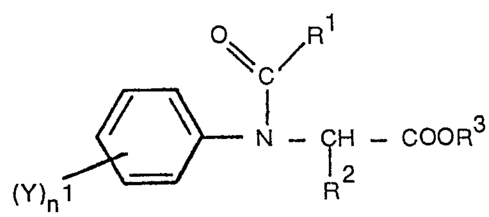

(III)

worin $R^1$ eine Methoxymethylgruppe ist oder für eine Phenylgruppe steht, die gegebenenfalls durch 1 bis 5 Substituenten substituiert ist, welche unabhängig von einander aus Halogen-, $C_{1-4}$-Alkyl-, $C_{1-4}$-Alkoxy-, Nitro- und Trifluormethylresten ausgewählt sind, $R^2$ Wasserstoff oder Methyl ist, $R^3$ $C_{2-11}$-Alkyl ist, jeder Rest Y unabhängig Halogen, Methyl oder Trifluormethyl ist und $n^1$ für 1 bis 5 steht, enthält.

2. Zusammensetzung nach Anspruch 1, dadurch gekennzeichnet, dass im Insektizid der Formel I A eine susbtituierte Benzylgruppe der Formel IV und B eine Gruppe der Formel II ist.

3. Zusammensetzung nach Anspruch oder 2, dadurch gekennzeichnet, dass in dem Insektizid der Formel I A $\alpha$-Isopropyl-4-chlorbenzyl ist, R Wasserstoff oder Cyano ist, *n* 1 ist und X 3-Phenoxy ist und B eine Gruppe der Formel II ist.

4. Zusammensetzung nach Anspruch 1, dadurch gekennzeichnet, dass in dem Insektizid der Formel I A eine Cyclopropylgruppe der Formel V ist und B eine Gruppe der Formel II ist.

5. Zusammensetzung nach Anspruch 1 oder 4, dadurch gekennzeichnet, dass in dem Insektizid der Formel I A 2,2-Dimethyl-3-(2,2-dichlorvinyl)cyclopropyl oder 2,2,3,3-Tetramethylcyclopropyl ist, R Wasserstoff oder Cyano ist, *n* 1 ist und X 3-Phenoxy ist und B eine Gruppe der Formel II ist.

6. Zusammensetzung nach Anspruch 1, dadurch gekennzeichnet, dass in dem Insektizid der Formel I A 2,2-Dimethyl-3-(2-methyl-1-propenyl)cyclopropyl ist und B eine 3,4,5,6-Tetrahydrophthalimidomethylgruppe ist.

7. Zusammensetzung nach einem der Ansprüche 1 bis 6, dadurch gekennzeichnet, dass in der Verbindung der Formel III $R^1$ unsubstituiertes Phenyl oder Methoxymethyl ist und $R^3$ $C_{2-8}$-Alkyl ist.

8. Zusammensetzung nach Anspruch 7, dadurch gekennzeichnet, dass in der Verbindung der Formel III $R^2$ Methyl ist, $n^1$ 2 ist und jedes Y aus der Fluor, Chlor und Methyl umfassenden Gruppe ausgewählt ist.

9. Zusammensetzung nach Anspruch 7 oder 8, dadurch gekennzeichnet, dass in der Verbindung der Formel III $(Y)_n{}^1$ für 3,4-Dichlor, 3-Chlor-4-fluor oder 2,6-Dimethyl steht.

10. Verfahren zur Bekämpfung von Schädlingen an einem Ort, dadurch gekennzeichnet, dass man auf den Ort eine Zusammensetzung für die Schädlingsbekämpfung nach einem der Ansprüche 1 bis 9 aufbringt.